# NEUE EUROPÄISCHE PATENTSCHRIFT

(11) **EP 3 797 036 B2**
(45) Veröffentlichungstag und Bekanntmachung des Hinweises auf die Entscheidung über den Einspruch: **25.02.2026**
(45) Hinweis auf die Patenterteilung: 05.07.2023
(21) Anmeldenummer: 19720652.7
(22) Anmeldetag: 02.05.2019
(51) Int. Cl.: B41J 2/44, B41J 11/00, B41J 3/407, B41J 3/413, G06F 21/44

(54) **MARKIERUNGSSYSTEM ZUM MARKIEREN EINES MARKIEROBJEKTS**
MARKING SYSTEM FOR MARKING A MARKING OBJECT
SYSTÈME DE MARQUAGE POUR MARQUER UN OBJET DE REPÉRAGE

(30) Priorität: 22.05.2018 BE 201805326
(43) Veröffentlichungstag der Anmeldung: 31.03.2021
(73) Patentinhaber: Phoenix Contact GmbH & Co. KG, 32825 Blomberg (DE)
(72) Erfinder: KLAGES, Kilian, 32756 Detmold (DE); HOFMANN, Alexander, 31789 Hameln (DE); ISAAK, Peter, 32758 Detmold (DE); RHEKER, Torben, 37696 Marienmünster (DE)
(74) Vertreter: Maikowski & Ninnemann Patentanwälte Partnerschaft mbB
(86) Internationale Anmeldenummer: PCT/EP2019/061256
(87) Internationale Veröffentlichungsnummer: WO 2019/223981

(56) Entgegenhaltungen:
- EP-B1- 2 664 965
- WO-A1-2012/065816
- WO-A1-2016/179204
- DE-A1- 102010 037 564
- DE-A1- 102015 119 641
- US-A1- 2009 057 421
- US-A1- 2010 013 595

## Beschreibung

Die Erfindung betrifft ein Markierungssystem zum Markieren eines Markierobjekts nach dem Oberbegriff des Anspruchs 1 und ein Verfahren zum Betreiben eines Markierungssystems.

Ein derartiges Markierungssystem umfasst eine Markiereinrichtung zum Anbringen einer Markierung auf einem Markierobjekt.

Ein Markierungssystem dieser Art dient insbesondere zum Herstellen von Markierobjekten in Form von beschrifteten Markierungsschildern. Solche Markierungsschilder können aus Metall, zum Beispiel Edelstahl oder Aluminium, oder auch Kunststoff hergestellt sein und werden beispielsweise mittels eines Lasers, mittels Tintenstrahldruck oder mittels Thermotransferdruck mit einer beständigen Beschriftung versehen. Durch solche Markierungsschilder können beispielsweise elektrische (oder sonstige) Kabel oder elektrische Baugruppen wie Klemmeneinrichtungen markiert werden, um auf diese Weise eine Identifizierung an Kabeln oder elektrischen Baugruppen bereitzustellen.

Herkömmlich werden zu beschriftende Markierobjekte einem Markierungssystem, beispielsweise einem Laserbeschriftungssystem, zugeführt, indem eine Mehrzahl von Markierobjekten, zum Beispiel sechs Markierobjekte, auf einem Träger zum Beispiel in Form einer als Liner bezeichneten Folie dem Markierungssystem zugeführt werden. Auf dem Träger kann eine Kennzeichnung zum Beispiel in Form eines Barcodes angebracht sein, die durch das Markierungssystem erfasst werden kann, um anhand der Kennzeichnung Betriebsparameter des Markierungssystems, zum Beispiel Betriebsparameter für eine Lasereinrichtung des Markierungssystem, einzustellen.

Weil ein solcher Träger - über die Funktion zum Tragen der zu beschriftenden Markierobjekte hinaus - nach der Beschriftung der Markierobjekte keine Funktion aufweist und die Kosten für die zu beschriftenden Markierobjekte erhöht, ist grundsätzlich wünschenswert, auf einen solchen Träger zu verzichten. Hierbei ist jedoch sicherzustellen, dass ein Markierungssystem die ihm zugeführten Markierobjekte auch richtig beschriftet und nur solche Markierobjekte verarbeitet, die (zulässigerweise) durch das Markierungssystem verarbeitet werden dürfen. Insbesondere bei einem Markierungssystem in Form eines Laserbeschriftungssystems ist hierbei sicherzustellen, dass es nicht aufgrund einer Verwendung von falschen Betriebsparametern zu (übermäßigen) Emissionen, zum Beispiel einer Freisetzung von Partikeln, kommen kann.

Bei einem aus der WO 2012/065816 A1 bekannten Markierungssystem in Form einer Laserbeschriftungseinheit können Markierobjekte über einen Drehteller in den Bereich einer Auflagefläche verbracht werden, um mittels eines Laserstrahls beschriftet zu werden.

Die DE 10 2010 037 564 A1 beschreibt ein Bedruckungsobjekt und einen Drucker zum Bedrucken eines Bedruckungsobjekts. Auf dem Bedruckungsobjekt ist eine Strichcode-Kennzeichnung mit einer Mehrzahl von hintereinander angeordneten Einzelstrichen vorgesehen, mittels dessen gewährleistet werden kann, dass ein optimaler Druck für das Bedruckungsobjekt erfolgt.

Die EP 2 193 031 B1 beschreibt ein Markierobjekt, das einen Objektträger und von dem Objektträger gehaltene, markierbare Objektnutzen aufweist. Der Objektträger umfasst wenigstens ein Identifikationsmittel, das eine das Markierobjekt betreffende Informationen enthält.

Aufgabe der vorliegenden Erfindung ist es, ein Markierungssystem zum Markieren eines Markierobjekts und ein Verfahren zum Betreiben eines Markierungssystems bereitzustellen, die eine zuverlässige Markierung von zulässigen Markierobjekten möglicherweise unter Verzicht auf einen Träger ermöglichen.

Diese Aufgabe wird durch einen Gegenstand mit den Merkmalen des Anspruchs 1 gelöst.

Demnach umfasst das Markierungssystem eine Erfassungseinrichtung zum Erfassen einer mit dem Markierobjekt assoziierten Kenninformation und eine Steuereinrichtung zum Steuern der Markiereinrichtung, wobei die Steuereinrichtung ausgebildet ist, die über die Erfassungseinrichtung erfasste Kenninformation zu authentisieren und die Markiereinrichtung in Abhängigkeit von der Authentisierung anzusteuern.

Die Erfassungseinrichtung dient dazu, eine Kenninformation, die mit dem Markierobjekt assoziiert ist, zu erfassen. Anhand der erfassten Kenninformation erfolgt dann eine Authentisierung, im Rahmen derer festgestellt wird, ob es sich bei dem Markierobjekt um ein zulässiges Markierobjekt handelt, das mittels des Markierungssystems beschriftet werden kann. Vor der Durchführung eines Markierungsvorgangs erfolgt somit eine Authentisierung eines zu beschriftenden Markierobjekts, sodass ausgeschlossen werden kann, dass Markierobjekte in unzulässiger Weise in dem Markierungssystem beschriftet werden.

Abhängig von der Authentisierung kann die Markiereinrichtung des Markierungssystems somit in unterschiedlicher Weise angesteuert werden, um bei erfolgreicher Authentisierung einen Markiervorgang in gewünschter Weise durchzuführen, bei nicht erfolgreicher Authentisierung hingegen einen Markiervorgang mit (im Vergleich zur bestimmungsgemäßen Markierung) veränderten Betriebsparametern durchzuführen.

Bei dem Markierobjekt handelt es sich um ein flächiges Markierungsschild, das (ganz oder teilweise) aus einem Metallmaterial, zum Beispiel Edelstahl oder Aluminium, oder aus einem Kunststoffmaterial gefertigt ist. Solche Markierungsschilder können einzeln vorliegen und können beispielsweise in einem Behälter, zum Beispiel einem Verpackungskarton oder dergleichen, oder auch einem Magazin der Markiereinrichtung in gestapelter Weise vorgehalten werden.

Solche Markierungsfelder können hierbei zum Beispiel auch beschichtet sein.

Die Authentisierung der erfassten Kenninformation erfolgt durch Abgleich mit gültigen Kennungen, die als solche in einer Speichereinrichtung des Markierungssystems gespeichert sind. Zum Abgleich vergleicht die Steuereinrichtung zum Zwecke der Authentisierung die erfasste Kenninformation mit den in der Speichereinrichtung als gültig gespeicherten Kennungen. Wird festgestellt, dass die erfasste Kenninformation einer gültigen Kennung entspricht, so ist die Authentisierung erfolgreich. Wird keine Entsprechung der erfassten Kenninformation mit einer als gültig in der Speichereinrichtung gespeicherten Kennung festgestellt, ist die Authentisierung nicht erfolgreich.

Die Speicherung von gültigen Kennungen in der Speichereinrichtung des Markierungssystems hat den Vorteil, dass die Authentisierung auch durchgeführt werden kann, ohne dass das Markierungssystem in Kommunikationsverbindung mit externen Systemen ist, sodass das Markierungssystem offline arbeiten kann.

Alternativ ist auch möglich, dass der Abgleich der erfassten Kenninformation mit gültigen Kennungen dadurch erfolgt, dass das Markierungssystem über eine geeignete Kommunikationsverbindung, zum Beispiel eine Netzwerkverbindung unter Verwendung einer Internetverbindung, mit einer externen Authentisierungseinheit zum Beispiel am Orte des Herstellers des Markierungssystem oder der Markierobjekte kommuniziert, um auf diese Weise die erfasste Kenninformation zu authentisieren. In diesem Fall sind gültige Kennungen nicht in dem Markierungssystem selbst gespeichert, sondern liegen auf Seiten der Authentisierungseinheit vor, sodass die Authentisierung durch Kommunikation mit der externen Authentisierungseinheit erfolgt.

Die Authentisierung kann gegebenenfalls zweistufig erfolgen. So kann in einem ersten Schritt geprüft werden, ob es sich bei der erfassten Kenninformation überhaupt um eine zulässige Kenninformation handelt, also zum Beispiel eine Kenninformation mit einem vorbestimmten Format, die einem vorbestimmten Hersteller zugerechnet werden kann. Wird festgestellt, dass die Kenninformation kein zulässiges Format aufweist, kann die Authentisierung bereits als nicht erfolgreich beendet werden. In einem zweiten Schritt kann (bei erfolgreich abgeschlossenem erstem Schritt) dann geprüft werden, ob die grundsätzlich zulässige Kenninformation auch (noch) gültig ist. So ist vorgesehen, dass eine Kenninformation in Form zum Beispiel einer Seriennummer eines Markierobjekts nur einmal verwendet werden darf. Ist im Rahmen eines Markiervorgangs eine Seriennummer bereits verwendet worden und sind Markierobjekte mit einer bestimmten Seriennummer bereits markiert worden, so wird ein weiterer Markiervorgang unter der gleichen Seriennummer gegebenenfalls unterbunden.

Entsprechend ist vorgesehen, dass eine in der Speichereinrichtung gespeicherte, gültige Kennung als ungültig gesetzt wird, wenn im Rahmen der Authentisierung durch Abgleich mit der erfassten Kenninformation festgestellt wird, dass die gespeicherte Kennung der erfassten Kenninformation entspricht. Dadurch, dass die (vormals) gültige Kennung nunmehr als ungültig gesetzt wird, wird sichergestellt, dass eine dieser Kennung entsprechende Kenninformation nur einmal verwendet werden kann, eine erneute Erfassung der gleichen Kenninformation somit zu einer nicht erfolgreichen Authentisierung führt.

In der Kenninformation können auch Informationen zu Betriebsparametern, die bei einem Markiervorgang des Markierobjekts zu verwenden sind, gespeichert sein, oder anhand der Erfassung der Kenninformation kann die Markiereinrichtung zum Verwenden bestimmter Betriebsparameter angesteuert werden. Anhand der Kenninformation kann zum Beispiel die Art (Größe und Material) eines Markierobjekts identifiziert werden, sodass die Markiereinrichtung mit zum Beschriften des Markierobjekts geeigneten Parametern angesteuert wird. Zu den Betriebsparametern können beispielsweise die Intensität eines Laserstrahls und/oder die Vorschubgeschwindigkeit eines Laserstrahls bei der Markierung gehören. Für unterschiedliche Materialien unterschiedlicher Markierobjekte können beispielsweise unterschiedliche Laserstrahlintensitäten bei einem Markierungssystem in Form eines Laserbeschriftungssystems zu verwenden sein.

Abhängig vom Ergebnis der Authentisierung steuert die Steuereinrichtung die Markiereinrichtung beispielsweise nach unterschiedlichen Betriebsarten an. So entspricht eine erste Betriebsart einem bestimmungsgemäßen Markiervorgang bei erfolgreicher Authentisierung, im Rahmen dessen die Markiereinrichtung ein zu beschriftendes Markierobjekt in bestimmungsgemäßer Weise unter Verwendung vorbestimmter Betriebsparameter markiert. Die zweite Betriebsart unterscheidet sich hingegen von der ersten Betriebsart und wird ausgeführt, wenn die Authentisierung nicht erfolgreich ist. Im Rahmen der zweiten Betriebsart wird ein Markiervorgang durchgeführt, jedoch mit gegenüber der ersten Betriebsart veränderten Betriebsparametern, nämlich einer reduzierten Markierungsgeschwindigkeit und gegebenenfalls zusätzlich einer reduzierten Laserstrahlintensität (bei einem Markierungssystem in Form eines Laserbeschriftungssystems).

Abhängig von der Authentisierung wird somit eine bestimmungsgemäße Markierung des zu beschriftenden Markierobjekts durchgeführt oder nicht. Ist die Authentisierung erfolgreich, ist sichergestellt, dass es sich bei dem Markierobjekt um ein zulässiges, mittels des Markierungssystems beschriftbares Markierobjekt handelt, dessen Eigenschaften (zum Beispiel die Größe und das Material) bekannt sind und für das eine Markierung somit mit geeigneten, für das Markierobjekt bestimmten Betriebsparametern durchgeführt werden kann. Ist die Authentisierung hingegen nicht erfolgreich, wird wird eine Markierung durchgeführt, jedoch mit deutlich veränderten Betriebsparametern, sodass insbesondere unerwünschte Emissionen bei der Markierung wirkungsvoll verhindert sind.

Ein zu beschriftendes Markierobjekt kann beispielsweise durch einen Hersteller in einem Behälter, zum Beispiel in Form eines Verpackungskartons oder dergleichen, zusammen mit anderen Markierobjekten ausgeliefert werden. Auf einem solchen Behälter kann eine dem Markierobjekt zugeordnete Kennzeichnung, die die Kenninformation enthält, angebracht sein. Die in der Kennzeichnung enthaltene Kenninformation wird in das Markierungssystem eingegeben oder durch das Markierungssystem erfasst und sodann mittels der Steuereinrichtung authentisiert, sodass vor Durchführung eines Markiervorgangs festgestellt wird, ob in dem Behälter enthaltene Markierobjekte mittels des Markierungssystems beschriftet werden können und welche Betriebsparameter gegebenenfalls hierfür zu verwenden sind.

Die Kenninformation kann beispielsweise in Form einer Artikelnummer und einer Seriennummer als solche auf dem Behälter angegeben sein. Denkbar ist jedoch auch, dass die Kenninformation in verschlüsselter Form auf dem Behälter angebracht ist oder in sonstiger Form vorliegt, sodass ein Nutzer keine (unmittelbare) Kenntnis über die Kenninformation an sich erhält. So kann die Kenninformation beispielsweise eine Artikelnummer und eine Seriennummer enthalten, die jedoch nicht als solche in Klartextform zum Beispiel auf dem Behälter angegeben sind, sondern durch ein geeignetes Verschlüsselungsverfahren (zum Beispiel unter Verwendung der RSA-Technologie) unter Verwendung eines (dem Markierungssystem bekannten Schlüssels) verschlüsselt sind. Die Kenninformation wird somit in verschlüsselter Form erfasst und in dem Markierungssystem (unter Verwendung des ihm bekannten Schlüssels) entschlüsselt, um nach Entschlüsselung dann die erfasste Kenninformation zu authentisieren.

In einer Ausgestaltung ist die Erfassungseinrichtung durch eine Scaneinrichtung zum Scannen der Kenninformation gebildet. Eine solche Scaneinrichtung kann beispielsweise zum Scannen eines Barcodes, eines QR-Codes oder auch eines RFID-Tags ausgebildet sein, um auf diese Weise die Kenninformation anhand des Barcodes, des QR-Codes oder des RFID-Tags einzulesen.

Die Erfassungseinrichtung kann alternativ aber auch durch eine Tastatur zum manuellen Eingeben der Kenninformation gebildet sein. In diesem Fall gibt ein Nutzer die Kenninformation, die er beispielsweise von dem Behälter, in dem ein oder mehrere Markierobjekte enthalten sind, abliest, über die Tastatur in das Markierungssystem ein.

In wiederum anderer Ausgestaltung kann die Kenninformation beispielsweise auch über einen sogenannten Batch Import in das Markierungssystem eingelesen werden, also durch sukzessives informationstechnisches Einlesen einer Abfolge von Kenninformationen für nacheinander zu beschriftende Markierobjekte.

Die Markiereinrichtung ist vorzugsweise mit einer Lasereinrichtung ausgestaltet, die einen Laser zum Erzeugen eines Laserstrahls zum Beschriften des Markierobjekts aufweist. Das Markierungssystem stellt somit ein Laserbeschriftungssystem dar, im Rahmen dessen eine Markierung in Form von Schrift und/oder grafischen Elementen auf einem Markierobjekt, nämlich einem Markierungsschild aus Metall oder Kunststoff, angebracht wird.

Denkbar und möglich ist aber auch, dass das Markierungssystem zum Beschriften des Markierobjekts mittels Tintenstrahldruck oder Thermotransferdruck ausgebildet ist. Die Markierungseinrichtung kann hierzu mit einer Tintenstrahldruckeinrichtung oder einer Thermotransferdruckeinrichtung ausgestaltet sein.

Die Aufgabe wird auch durch ein Verfahren zum Betreiben eines Markierungssystems zum Markieren eines Markierobjekts gelöst. Bei dem Verfahren wird eine Markierung unter Verwendung einer Markiereinrichtung auf einem Markierobjekt angebracht, wobei das Markierobjekt ein Markierungsschild ist, das ein Metallmaterial oder ein Kunststoffmaterial aufweist. Dabei ist vorgesehen, dass eine Erfassungseinrichtung eine mit dem Markierobjekt assoziierte Kenninformation erfasst und eine Steuereinrichtung die über die Erfassungseinrichtung erfasste Kenninformation authentisiert und die Markiereinrichtung in Abhängigkeit von der Authentisierung ansteuert, wobei die Steuereinrichtung die Markiereinrichtung in einer ersten Betriebsart zum Anbringen einer Markierung auf dem Markierobjekt ansteuert, wenn die Authentisierung erfolgreich ist, und in einer von der ersten Betriebsart unterschiedlichen, zweiten Betriebsart ansteuert, wenn die Authentisierung nicht erfolgreich ist, wobei die Steuereinrichtung die Markiereinrichtung in der zweiten Betriebsart derart ansteuert, dass eine Markierung auf dem Markierobjekt angebracht wird, jedoch mit zumindest einem von der ersten Betriebsart unterschiedlichen Betriebsparameter der Markiereinrichtung, nämlich mit einer reduzierten Markierungsgeschwindigkeit, wobei das Markierungssystem eine Speichereinrichtung aufweist, in der eine Mehrzahl von gültigen Kennungen gespeichert ist, wobei die Steuereinrichtung die über die Erfassungseinrichtung erfasste Kenninformation anhand der in der Speichereinrichtung gespeicherten gültigen Kennungen authentisiert und eine solche gültige Kennung der in der Speichereinrichtung gespeicherten gültigen Kennungen, die der erfassten Kenninformation entspricht, als ungültig setzt.

Die vorangehend für das Markierungssystem beschriebenen Vorteile und vorteilhaften Ausgestaltungen finden auch auf das Verfahren Anwendung, sodass auf das vorangehend Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Markierungssystems;
- Fig. 2: eine schematische Ansicht eines Behälters mit einer daran angebrachten Kennzeichnung, die eine Kenninformation enthält;
- Fig. 3: ein Ablaufdiagramm darstellend den Ablauf zum Ausführen eines Markiervorgangs;
- Fig. 4: eine schematische Ansicht der funktionalen Ausgestaltung des Markierungssystems;
- Fig. 5: eine schematische Ansicht eines markierten Markierobjekts in Form eines Markierungsschildes; und
- Fig. 6: eine schematische Ansicht einer Anordnung von auf einem Träger angebrachten Markierobjekten in Form von Markierungsschildern.

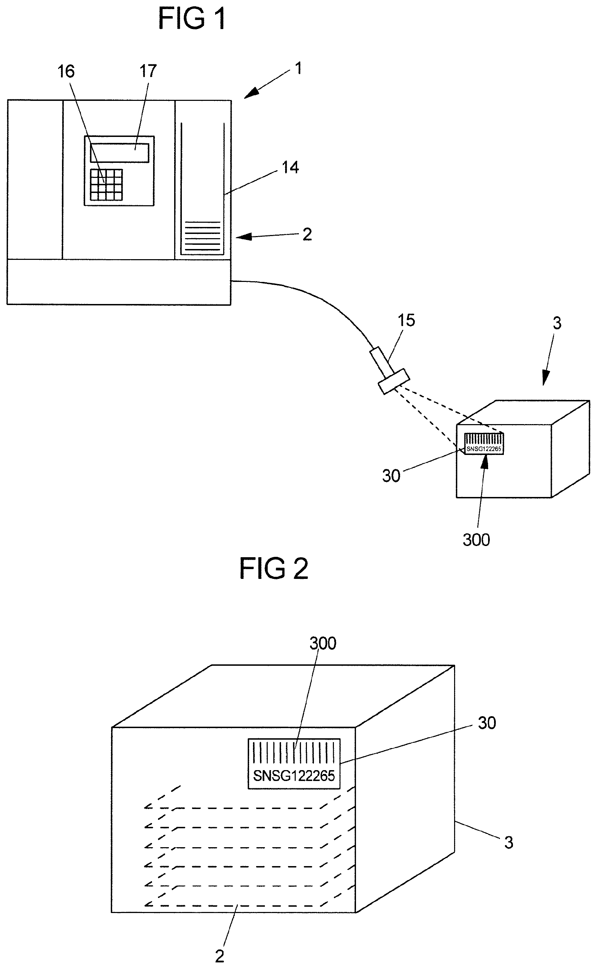

Ein in Fig. 1 schematisch dargestelltes Markierungssystem 1 dient zum Beschriften von Markierobjekten 2, die beispielsweise als Markierungsschilder vorliegen können. Das Markierungssystem 1 ist, bei dem dargestellten Ausführungsbeispiel, als Laserbeschriftungssystem ausgestaltet und kann Markierobjekte 2 in Form von aus Metall, zum Beispiel Edelstahl oder Aluminium, oder Kunststoff gefertigten Markierungsschildern verarbeiten.

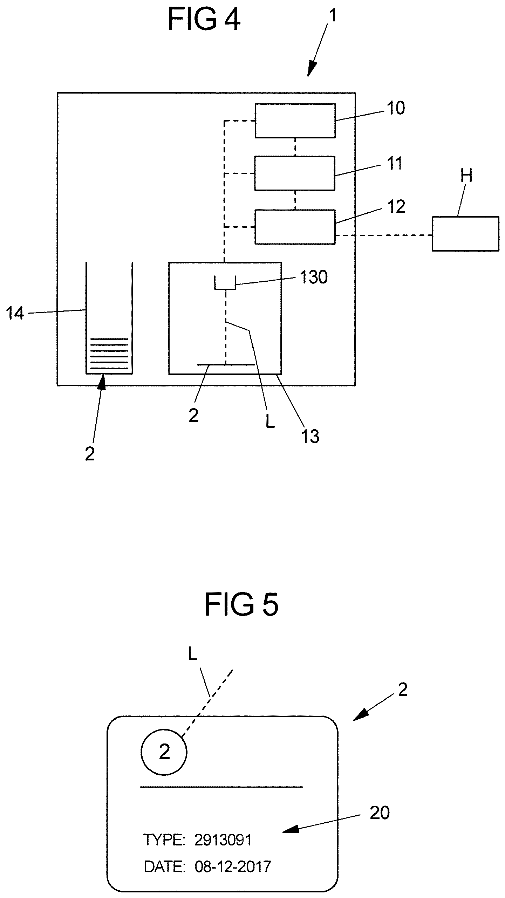

Wie in der schematischen Ansicht gemäß Fig. 4 dargestellt, weist das Markierungssystem 1 eine Markiereinrichtung 13 mit einer Lasereinrichtung 130 zum Erzeugen eines Laserstrahls L auf, mittels dessen Markierobjekte 2 mit einer zum Beispiel Text- oder graphische Elemente enthaltenen Beschriftung 20, wie in Fig. 5 dargestellt, versehen werden können. Die Markierobjekte 2 werden hierzu aus einem Magazin 14 in vereinzelter Weise zugeführt, um durch die Markiereinrichtung 13 mittels des Laserstrahls L beschriftet zu werden.

Die Markiereinrichtung 13 wird über eine Steuereinrichtung 10 gesteuert. Eine Speichereinrichtung 11 kann zum Beispiel Betriebsparameter zum Steuern der Markiereinrichtung 13 speichern, und über eine Kommunikationseinrichtung 12 kann eine Kommunikation zu einer externen Kommunikationseinheit H bereitgestellt werden. Über eine Anzeigeeinrichtung 17 in Form eines Displays können Informationen ausgegeben werden.

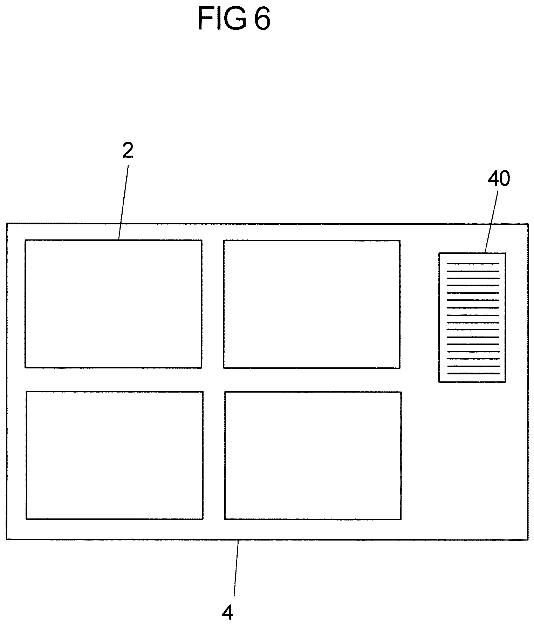

Bei einem herkömmlichen Markierungssystem erfolgt eine Beschriftung von Markierobjekten 2 dadurch, dass die Markierobjekte 2 auf einem Träger 4 in Form eines durch eine Folie gebildeten Liners in zusammenhängender Weise einer Markiereinrichtung zugeführt werden, um die Markierobjekte 2 in einem Arbeitsgang zu beschriften, wie dies in Fig. 6 beispielhaft dargestellt ist. Über eine auf dem Träger 4 zum Beispiel in Form eines Barcodes angebrachte Kennzeichnung 40 können hierbei Betriebsparameter identifiziert werden, die zur Beschriftung der Markierobjekte 2 anzuwenden sind, sodass das Beschriften der Markierobjekte 2 in gesteuerter Weise erfolgen kann.

Ein Träger 4, wie er in Fig. 6 dargestellt ist, hat nach der Beschriftung keine Funktion. Nach der Beschriftung werden die Markierobjekte 2 vielmehr von dem Träger 4 entnommen und ihrer eigentlichen, bestimmungsgemäßen Verwendung zugeführt, um beispielsweise eine elektrische Einrichtung oder dergleichen zu kennzeichnen. Wünschenswert kann daher sein, auf einen solchen Träger 4 zu verzichten, was insbesondere Kostenvorteile mit sich bringen kann.

In Abkehr von einer Identifizierung von zu beschriftenden Markierobjekten 2 über eine auf einem Träger angebrachte Kennzeichnung sollen mit dem in Fig. 1 und 4 dargestellten Markierungssystem 1 Markierobjekte 2 verarbeitet werden, die in vereinzelter Form zum Beispiel in einem Behälter 3 in Form einer Verpackung, wie dies in Fig. 2 dargestellt ist, ausgeliefert und von einem Anwender des Markierungssystems 1 verwendet werden. Zur Identifizierung und insbesondere Authentisierung der Markierobjekte 2 wird hierbei eine Kenninformation 300 verwendet, die mittels einer Kennzeichnung 30 auf dem Behälter 3 angebracht ist und mittels einer Erfassungseinrichtung in Form einer Scaneinrichtung 15 eingelesen oder mittels einer Tastatur 16 durch einen Nutzer manuell eingegeben werden kann (siehe Fig. 1). Anhand der Kenninformation 300 wird das Markierungssystem 1 gesteuert, um einen Markierungsvorgang zum Anbringen einer Beschriftung auf einem jeweiligen Markierobjekt 2 durchzuführen.

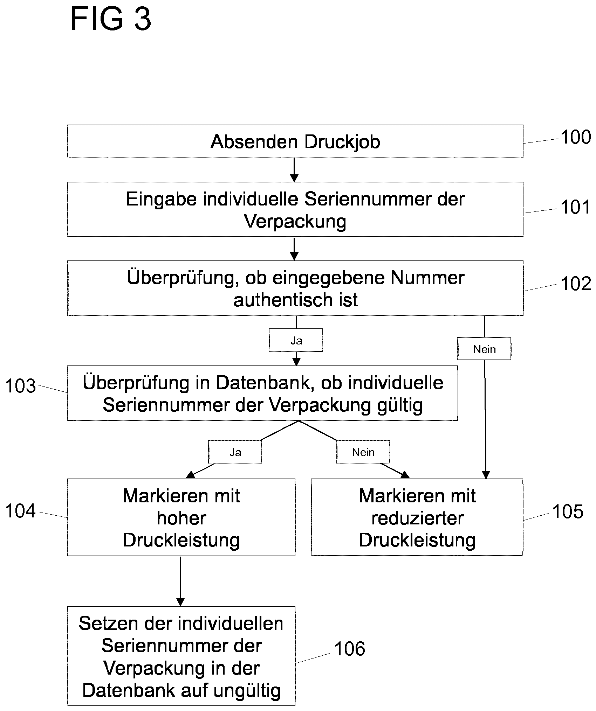

Der Ablauf bei einem Markiervorgang ist dann zum Beispiel wie in Fig. 3 dargestellt. So wird zunächst (Schritt 100) ein Druckjob erstellt, zum Beispiel mittels einer geeigneten Software, und an das Markierungssystem 1 gesendet, wie dies auch bei herkömmlichen Druckvorgängen der Fall ist. Im nächsten Schritt 101 wird ein Nutzer zum Beispiel aufgefordert, eine individuelle Seriennummer, die dem zu beschriftenden Markierobjekt 2 zugeordnet ist und beispielsweise als Kenninformation 300 auf der Verpackung 3 des Markierobjekts 2 angegeben ist, über die Tastatur 16 einzugeben oder über die Scaneinrichtung 15 einzulesen.

Anhand der so erfassten Kenninformation 300 führt die Steuereinrichtung 10 des Markierungssystems 1 sodann eine Überprüfung durch, ob die erfasste Kenninformation 300 authentisch ist, beispielsweise indem geprüft wird, ob die eingegebene Kenninformation 300 überhaupt ein vorbekanntes, vorbestimmtes Format aufweist und als solche eine zulässige, geeignete Kenninformation darstellt (Schritt 102).

Ist dieser erste Authentisierungsschritt erfolgreich, wird in einem zweiten Authentisierungsschritt geprüft, ob die erfasste Kenninformation 300 einer gültigen Kennung anspricht. Hierzu gleicht die Steuereinrichtung 10 die erfasste Kenninformation 300 mit zum Beispiel in der Speichereinrichtung 11 gespeicherten, gültigen Kennungen ab, indem die Steuereinrichtung 10 die erfasste Kenninformation 300 mit gespeicherten Kennungen vergleicht und, wenn eine der erfassten Kenninformation 300 ansprechende Kennung vorliegt, die Kenninformation 300 als gültig erkennt. Ein Markiervorgang kann somit in bestimmungsgemäßer Weise mit einer hohen Druckleistung, zum Beispiel einer maximalen Markiergeschwindigkeit, durchgeführt werden (Schritt 104), wobei zusätzlich Betriebsparameter der Markiereinrichtung 13, zum Beispiel eine Laserintensität, abhängig von der identifizierten Kenninformation 300 und des dadurch identifizierten Markierobjekts 2 (zum Beispiel abhängig vom Material des Markierobjekts 2) in geeigneter Weise eingestellt werden können.

In Schritt 106 wird die der erfassten Kenninformation 300 entsprechende, in der Speichereinrichtung 11 gespeicherte Kennung nunmehr als ungültig gesetzt, um zu verhindern, dass die gleiche Kenninformation 300 noch einmal verwendet werden kann.

Wird die gleiche Kenninformation 300 noch einmal erfasst, führt dies zu einer nicht erfolgreichen Authentisierung.

Ist die Authentisierung im ersten Schritt 102 oder im zweiten Schritt 103 nicht erfolgreich, so wird, wie dies in Fig. 3 dargestellt ist dennoch ein Markiervorgang durchgeführt, jedoch mit anderen Betriebsparametern und dadurch reduzierter Druckleistung, nämlich mit einer reduzierten Markierungsgeschwindigkeit (zum Beispiel mit 1/100 der Geschwindigkeit im Vergleich zur erfolgreichen Authentisierung) und gegebenenfalls zusätzlich reduzierter Laserleistung (bei Laserbeschriftung). Es erfolgt somit eine Beschriftung, jedoch mit reduzierter Geschwindigkeit und gegebenenfalls auch mit anderen Betriebsparametern, zum Bespiel mit einer reduzierten Intensität eines verwendeten Laserstrahls L. Auf diese Weise kann auch bei nicht erkannten und korrekt authentisierten Markierobjekte 2 eine Beschriftung durchgeführt werden, wobei jedoch ungewünschte Emissionen, zum Beispiel ein Freisetzen von Partikeln, reduziert werden.

Alternativ ist jedoch auch möglich, wie dies in Fig. 3 dargestellt ist, dass dennoch ein Markiervorgang durchgeführt wird, jedoch mit anderen Betriebsparametern und dadurch reduzierter Druckleistung, zum Beispiel mit einer reduzierten Markierungsgeschwindigkeit (zum Beispiel mit 1/100 der Geschwindigkeit im Vergleich zur erfolgreichen Authentisierung) und/oder reduzierter Laserleistung (bei Laserbeschriftung). Es erfolgt somit eine Beschriftung, jedoch mit reduzierter Geschwindigkeit und gegebenenfalls auch mit anderen Betriebsparametern, zum Bespiel mit einer reduzierten Intensität eines verwendeten Laserstrahls L. Auf diese Weise kann auch bei nicht erkannten und korrekt authentisierten Markierobjekte 2 eine Beschriftung durchgeführt werden, wobei jedoch ungewünschte Emissionen, zum Beispiel ein Freisetzen von Partikeln, reduziert werden.

Die Kenninformation 300 kann beispielsweise in Form von Klartext vorliegen oder in einem Barcode, einem QR-Code einem RFID-Tag, einem Bildzeichen oder Logo oder einer Prägung kodiert sein. Entsprechend kann die Scaneinrichtung 15 zum Beispiel zum Einlesen von Informationen eines Barcodes, eines QR-Codes oder eines RFID-Tags ausgebildet sein.

Die in der Kennzeichnung 30 enthaltene Kenninformation 300 kann hierbei in verschlüsselter Form vorliegen. Enthält die Kennzeichnung 30 beispielsweise Klartext, so kann dieser Klartext nicht die eigentliche das Markierobjekt 2 identifizierende Kennformation 300 (zum Beispiel eine Artikelnummer oder eine Seriennummer) angeben, sondern kann die Kenninformation 300 in verschlüsselter Form enthalten. In diesem Fall ist die Steuereinrichtung 10 dazu ausgestaltet, die erfasste Kenninformation 300 unter Verwendung eines ihr bekannten Schlüssels (der auch zur Verschlüsselung der in der Kennzeichnung 30 enthaltenen Kenninformation 300 verwendet worden ist) zu entschlüsseln, um die Authentisierung im Markierungssystem 1 anhand der aus der Kennzeichnung 30 erhaltenen, entschlüsselten Kenninformation 300 durchzuführen.

Zur Verschlüsselung kann beispielsweise eine sogenannte RSA-Technologie eingesetzt werden, bei der die in der Kennzeichnung 30 enthaltene Kenninformation 300 durch Verwendung eines ersten (öffentlichen) Schlüssels auf Seiten des Lieferanten der in dem Behälter 3 enthaltenen Markierobjekte 2 bei Erstellung der Kennzeichnung 30 verschlüsselt wird. Das Markierungssystem 1 hat Kenntnis über den ersten (öffentlichen) Schlüssel und verfügt zudem über einen zweiten (privaten) Schlüssel, die gemeinsam zur Entschlüsselung herangezogen werden, sodass die aus der Kennzeichnung 30 erhaltenen Kenninformationen 300 entschlüsselt und in dem Markierungssystem 1 zum Zwecke der Authentisierung verarbeitet werden können.

Die Authentisierung kann prinzipiell, wie vorangehend erläutert, über in der Speichereinrichtung 11 gespeicherte, gültige Kennungen erfolgen. In diesem Fall kann das Markierungssystem 1 offline betrieben werden, ohne dass im Betrieb eine Kommunikationsverbindung, zum Beispiel eine Netzwerkverbindung, mit externen Einheiten H stehen muss.

Denkbar und möglich ist aber auch, dass die Authentisierung (in über die Steuerrichtung 10 gesteuerter Weise) dadurch erfolgt, dass das Markierungssystem 1 über die Kommunikationseinrichtung 12 mit einer externen Einheit H kommuniziert, die Kenntnis über gültige Kennungen hat und anhand von durch das Markierungssystem 1 übersandten Informationen die Authentisierung durch Abgleich der erfassten Kenninformation 300 mit gültigen Kennungen durchführt.

Mittels des Markierungssystems können ganz unterschiedliche Markierobjekte beschriftet werden, nämlich Markierobjekte aus Metall, zum Beispiel Edelstahl oder Aluminium, oder auch aus Kunststoff. Solche Markierobjekte können dann in beschrifteter Form zum Beispiel auf einer elektrischen Einrichtung, zum Beispiel einem Kabel, einer Klemmeneinrichtung oder einem elektrischen Gerät angebracht werden, um die elektrische Einrichtung zu identifizieren und Angaben zum Beispiel zur Funktion der elektrischen Einrichtung zu kennzeichnen.

### Bezugszeichenliste

- 1: Markierungssystem
- 10: Steuereinrichtung
- 100-106: Schritte
- 11: Speichereinrichtung
- 12: Kommunikationseinrichtung
- 13: Markiereinrichtung
- 130: Lasereinrichtung
- 14: Magazin
- 15: Scaneinrichtung
- 16: Tastatur
- 17: Anzeigeeinrichtung (Display)
- 2: Markierobjekt (Schilder)
- 20: Markierung
- 3: Behälter (Verpackung)
- 30: Kennzeichnung
- 300: Kenninformation
- 4: Träger (Liner)
- 40: Kennzeichnung
- H: Kommunikationspartner
- L: Laserstrahl

## Patentansprüche

1. Markierungssystem (1) zum Markieren eines Markierobjekts (2), mit
einer Markiereinrichtung (13) zum Anbringen einer Markierung (20) auf einem Markierobjekt (2), wobei das Markierobjekt (2) ein Markierungsschild ist, das ein Metallmaterial oder ein Kunststoffmaterial aufweist,
**gekennzeichnet durch** eine Erfassungseinrichtung (15, 16) zum Erfassen einer mit dem Markierobjekt (2) assoziierten Kenninformation (300) und
eine Steuereinrichtung (10) zum Steuern der Markiereinrichtung (13),
wobei die Steuereinrichtung (10) ausgebildet ist, die über die Erfassungseinrichtung (15, 16) erfasste Kenninformation (300) zu authentisieren und die Markiereinrichtung (13) in Abhängigkeit von der Authentisierung anzusteuern,
wobei die Steuereinrichtung (10) ausgebildet ist, die Markiereinrichtung (13) in einer ersten Betriebsart zum Anbringen einer Markierung (20) auf dem Markierobjekt (2) anzusteuern, wenn die Authentisierung erfolgreich ist, und in einer von der ersten Betriebsart unterschiedlichen, zweiten Betriebsart anzusteuern, wenn die Authentisierung nicht erfolgreich ist,
wobei die Steuereinrichtung (10) ausgebildet ist, die Markiereinrichtung (13) in der zweiten Betriebsart derart anzusteuern, dass eine Markierung (20) auf dem Markierobjekt (2) angebracht wird, jedoch mit zumindest einem von der ersten Betriebsart unterschiedlichen Betriebsparameter der Markiereinrichtung (13), nämlich mit einer reduzierten Markierungsgeschwindigkeit,
wobei das Markierungssystem (1) eine Speichereinrichtung (11) aufweist, in der eine Mehrzahl von gültigen Kennungen gespeichert ist, wobei die Steuereinrichtung (10) ausgebildet ist, die über die Erfassungseinrichtung (15, 16) erfasste Kenninformation (300) anhand der in der Speichereinrichtung (11) gespeicherten gültigen Kennungen zu authentisieren, wobei die Steuereinrichtung (10) ausgebildet ist, eine solche gültige Kennung der in der Speichereinrichtung (11) gespeicherten gültigen Kennungen, die der erfassten Kenninformation (300) entspricht, als ungültig zu setzen.

2. Markierungssystem (1) nach Anspruch 1, **dadurch gekennzeichnet, dass** die Steuereinrichtung (10) ausgebildet ist, über eine Kommunikationsverbindung mit einer externen Authentisierungseinheit (H) zu kommunizieren, um die über die Erfassungseinrichtung (15, 16) erfasste Kenninformation (300) zu authentisieren.

3. Markierungssystem (1) nach einem der vorangehenden Ansprüche, **dadurch gekennzeichnet, dass** die Steuereinrichtung (10) ausgebildet ist, zumindest einen Betriebsparameter der Markiereinrichtung (13) anhand der erfassten Kenninformation (300) einzustellen.

4. Markierungssystem (1) nach einem der vorangehenden Ansprüche, **dadurch gekennzeichnet, dass** die Kenninformation (300) in einer Kennzeichnung (30) auf einem dem Markierobjekt (2) zugeordneten Behälter (3) enthalten ist.

5. Markierungssystem (1) nach einem der vorangehenden Ansprüche, **dadurch gekennzeichnet, dass** die mit dem Markierobjekt (2) assoziierte, durch die Erfassungsvorrichtung (15, 16) erfasste Kenninformation (300) verschlüsselt ist, wobei die Steuereinrichtung (10) ausgebildet ist, die erfasste Kenninformation (300) vor der Authentisierung zu entschlüsseln.

6. Markierungssystem (1) nach einem der vorangehenden Ansprüche, **dadurch gekennzeichnet, dass** die Erfassungseinrichtung durch eine Scaneinrichtung (15) zum Scannen der Kenninformation (300) gebildet ist.

7. Markierungssystem (1) nach einem der vorangehenden Ansprüche, **dadurch gekennzeichnet, dass** die Erfassungseinrichtung durch eine Tastatur (16) zum manuellen Eingeben der Kenninformation (300) gebildet ist.

8. Markierungssystem (1) nach einem der vorangehenden Ansprüche, **dadurch gekennzeichnet, dass** die Markiereinrichtung (13) eine Lasereinrichtung (130), eine Tintenstrahldruckeinrichtung oder eine Thermotransferdruckeinrichtung zum Anbringen der Markierung (20) auf dem Markierobjekt (2) aufweist.

9. Verfahren zum Betreiben eines Markierungssystems (1) zum Markieren eines Markierobjekts (2),
bei dem eine Markierung (20) unter Verwendung einer Markiereinrichtung (13) auf einem Markierobjekt (2) angebracht wird, wobei das Markierobjekt (2) ein Markierungsschild ist, das ein Metallmaterial oder ein Kunststoffmaterial aufweist,
**dadurch gekennzeichnet, dass** eine Erfassungseinrichtung (15, 16) eine mit dem Markierobjekt (2) assoziierte Kenninformation (300) erfasst und
eine Steuereinrichtung (10) die über die Erfassungseinrichtung (15, 16) erfasste Kenninformation (300) authentisiert und die Markiereinrichtung (13) in Abhängigkeit von der Authentisierung ansteuert,
wobei die Steuereinrichtung (10) die Markiereinrichtung (13) in einer ersten Betriebsart zum Anbringen einer Markierung (20) auf dem Markierobjekt (2) ansteuert, wenn die Authentisierung erfolgreich ist, und in einer von der ersten Betriebsart unterschiedlichen, zweiten Betriebsart ansteuert, wenn die Authentisierung nicht erfolgreich ist,
wobei die Steuereinrichtung (10) die Markiereinrichtung (13) in der zweiten Betriebsart derart ansteuert, dass eine Markierung (20) auf dem Markierobjekt (2) angebracht wird, jedoch mit zumindest einem von der ersten Betriebsart unterschiedlichen Betriebsparameter der Markiereinrichtung (13), nämlich mit einer reduzierten Markierungsgeschwindigkeit,
wobei das Markierungssystem (1) eine Speichereinrichtung (11) aufweist, in der eine Mehrzahl von gültigen Kennungen gespeichert ist, wobei die Steuereinrichtung (10) die über die Erfassungseinrichtung (15, 16) erfasste Kenninformation (300) anhand der in der Speichereinrichtung (11) gespeicherten gültigen Kennungen authentisiert und eine solche gültige Kennung der in der Speichereinrichtung (11) gespeicherten gültigen Kennungen, die der erfassten Kenninformation (300) entspricht, als ungültig setzt.

## Claims

1. A marking system (1) for marking a marking object (2), comprising
a marking device (13) for applying a marking (20) to a marking object (2), wherein the marking object (2) is a marking plate which comprises a metal material or a plastic material,
**characterized by** a detection device (15, 16) for detecting identification information (300) associated with the marking object (2), and
a control device (10) for controlling the marking device (13),
wherein the control device (10) is configured to authenticate the identification information (300) detected by the detection device (15, 16) and to actuate the marking device (13) in dependence on the authentication,
wherein the control device (10) is configured to actuate the marking device (13) in a first operating mode for applying a marking (20) to the marking object (2) if the authentication is successful, and to actuate said marking device in a second operating mode different from the first operating mode if the authentication is not successful,
wherein the control device (10) is configured to actuate the marking device (13) in the second operating mode in such a way that a marking (20) is applied to the marking object (2), but with at least one operating parameter of the marking device (13) that is different from the first operating mode, namely with a reduced marking speed,
wherein the marking system (1) includes a storage device (11) in which a plurality of valid identifiers are stored, wherein the control device (10) is configured to authenticate the identification information detected by the detection device (15, 16) on the basis of the valid identifiers stored in the storage device (11), wherein the control device (10) is configured to set such a valid identifier of the valid identifiers stored in the storage device (11), which valid identifier corresponds to the detected identification information (300), as invalid.

2. The marking system (1) according to claim 1, **characterized in that** the control device (10) is configured to communicate with an external authentication unit (H) via a communication link in order to authenticate the identification information (300) detected by the detection device (15, 16).

3. The marking system (1) according to any of the preceding claims, **characterized in that** the control device (10) is configured to set at least one operating parameter of the marking device (13) on the basis of the detected identification information (300).

4. The marking system (1) according to any of the preceding claims, **characterized in that** the identification information (300) is contained in a label (30) on a container (3) assigned to the marking object (2).

5. The marking system (1) according to any of the preceding claims, **characterized in that** the identification information (300) associated with the marking object (2) and detected by the detection device (15, 16) is encrypted, wherein the control device (10) is configured to decrypt the detected identification information (300) prior to authentication.

6. The marking system (1) according to any of the preceding claims, **characterized in that** the detection device is formed by a scanning device (15) for scanning the identification information (300).

7. The marking system (1) according to any of the preceding claims, **characterized in that** the detection device is formed by a keypad (16) for manually entering the identification information (300).

8. The marking system (1) according to any of the preceding claims, **characterized in that** the marking device (13) includes a laser device (130), an inkjet printing device or a thermal transfer printing device for applying the marking (20) to the marking object (2).

9. A method for operating a marking system (1) for marking a marking object (2),
in which a marking (20) is applied to a marking object (2) by using a marking device (13), wherein the marking object (2) is a marking plate which comprises a metal material or a plastic material,
**characterized in that** a detection device (15, 16) detects identification information (300) associated with the marking object (2), and
a control device (10) authenticates the identification information (300) detected by the detection device (15, 16) and actuates the marking device (13) in dependence on the authentication,
wherein the control device (10) actuates the marking device (13) in a first operating mode for applying a marking (20) to the marking object (2) if the authentication is successful, and actuates said marking device in a second operating mode different from the first operating mode if the authentication is not successful,
wherein the control device (10) actuates the marking device (13) in the second operating mode in such a way that a marking (20) is applied to the marking object (2), but with at least one operating parameter of the marking device (13) that is different from the first operating mode, namely with a reduced marking speed,
wherein the marking system (1) includes a storage device (11) in which a plurality of valid identifiers are stored, wherein the control device (10) authenticates the identification information (300) detected by the detection device (15, 16) on the basis of the valid identifiers stored in the storage device (11), and sets such a valid identifier of the valid identifiers stored in the storage device (11), which corresponds to the detected identification information (300), as invalid.

## Revendications

1. Système de marquage (1) destiné à marquer un objet à marquer (2), comprenant
un dispositif de marquage (13) destiné à apposer un marquage (20) sur un objet à marquer (2), dans lequel l'objet à marquer (2) est un panneau de marquage qui comprend un matériau métallique ou une matière plastique,
**caractérisé par** un dispositif d'acquisition (15, 16) destiné à acquérir une information d'identification (300) associée à l'objet à marquer (2), et
un dispositif de commande (10) destiné à commander le dispositif de marquage (13),
dans lequel le dispositif de commande (10) est configuré pour authentifier l'information d'identification (300) acquise par le biais du dispositif d'acquisition (15, 16) et actionner le dispositif de marquage (13) en fonction de l'authentification,
dans lequel le dispositif de commande (10) est configuré pour actionner le dispositif de marquage (13) dans un premier mode de fonctionnement pour apposer un marquage (20) sur l'objet à marquer (2) lorsque l'authentification a réussi, et dans un deuxième mode de fonctionnement, différent du premier mode de fonctionnement, lorsque l'authentification n'a pas réussi,
dans lequel le dispositif de commande (10) est configuré pour actionner le dispositif de marquage (13) dans le deuxième mode de fonctionnement de telle sorte qu'un marquage (20) est apposé sur l'objet à marquer (2), toutefois avec au moins un paramètre de fonctionnement du dispositif de marquage (13) différent de celui dans le premier mode de fonctionnement, à savoir avec une réduite vitesse de marquage,
dans lequel le système de marquage (1) comprend un dispositif de mémorisation (11) dans lequel sont mémorisés une pluralité d'identifiants valides, le dispositif de commande (10) étant configuré pour authentifier l'information d'identification (300) acquise par le biais du dispositif d'acquisition (15, 16) à l'aide des identifiants valides mémorisés dans le dispositif de mémorisation (11), le dispositif de commande (10) étant configuré pour déclarer non valide un tel identifiant valide parmi les identifiants valides mémorisés dans le dispositif de mémorisation, qui correspond à l'information d'identification (300) acquise.

2. Système de marquage (1) selon la revendication 1, **caractérisé en ce que** le dispositif de commande (10) est configuré pour communiquer avec une unité d'authentification (H) externe par le biais d'une connexion de communication afin d'authentifier l'information d'identification (300) acquise par le biais du dispositif d'acquisition (15, 16).

3. Dispositif de marquage (1) selon l'une quelconque des revendications précédentes, **caractérisé en ce que** le dispositif de commande (10) est configuré pour régler au moins un paramètre de fonctionnement du dispositif de marquage (13) à l'aide de l'information d'identification (300) acquise.

4. Système de marquage (1) selon l'une quelconque des revendications précédentes, **caractérisé en ce que** l'information d'identification (300) est contenue dans une signalisation (30) sur un récipient (3) associé à l'objet à marquer (2).

5. Système de marquage (1) selon l'une quelconque des revendications précédentes, **caractérisé en ce que** l'information d'identification (300) acquise par le biais du dispositif d'identification (15, 16), associée à l'objet à marquer (2), est cryptée, le dispositif de commande (10) étant configuré pour décrypter l'information d'identification (300) acquise avant l'authentification.

6. Système de marquage (1) selon l'une quelconque des revendications précédentes, **caractérisé en ce que** le dispositif d'acquisition est formé par un dispositif de balayage (15) destiné à lire par balayage l'information d'identification (300).

7. Système de marquage (1) selon l'une quelconque des revendications précédentes, **caractérisé en ce que** le dispositif d'acquisition est formé par un clavier (16) servant à la saisie manuelle de l'information d'identification (300).

8. Système de marquage (1) selon l'une quelconque des revendications précédentes, **caractérisé en ce que** le dispositif de marquage (13) comprend un dispositif à laser (130), un dispositif d'impression par jet d'encre ou un dispositif d'impression par transfert thermique destiné à apposer le marquage (20) sur l'objet à marquer (2).

9. Procédé pour faire fonctionner un système de marquage (1) destiné à marquer un objet à marquer (2),
avec lequel un marquage (20) est apposé sur un objet à marquer (2) en utilisant un dispositif de marquage (13), l'objet à marquer (2) étant un panneau de marquage qui comprend un matériau métallique ou une matière plastique,
**caractérisé en ce qu'**un dispositif d'acquisition (15, 16) acquiert une information d'identification (300) associée à l'objet à marquer (2), et
un dispositif de commande (10) authentifie l'information d'identification (300) acquise par le biais du dispositif d'acquisition (15, 16) et actionne le dispositif de marquage (13) en fonction de l'authentification,
dans lequel le dispositif de commande (10) actionne le dispositif de marquage (13) dans un premier mode de fonctionnement pour apposer un marquage (20) sur l'objet à marquer (2) lorsque l'authentification a réussi, et dans un deuxième mode de fonctionnement, différent du premier mode de fonctionnement, lorsque l'authentification n'a pas réussi,
dans lequel le dispositif de commande (10) actionne le dispositif de marquage (13) dans le deuxième mode de fonctionnement de telle sorte qu'un marquage (20) est apposé sur l'objet à marquer (2), toutefois avec au moins un paramètre de fonctionnement du dispositif de marquage (13) différent de celui dans le premier mode de fonctionnement, à savoir avec une réduite vitesse de marquage,
dans lequel le système de marquage (1) comprend un dispositif de mémorisation (11) dans lequel sont mémorisés une pluralité d'identifiants valides, le dispositif de commande (10) authentifiant l'information d'identification (300) acquise par le biais du dispositif d'acquisition (15, 16) à l'aide des identifiants valides mémorisés dans le dispositif de mémorisation (11), et déclare non valide un tel identifiant valide parmi les identifiants valides mémorisés dans le dispositif de mémorisation (11), qui correspond à l'information d'identification (300) acquise.
